# EUROPEAN PATENT SPECIFICATION

(11) **EP 3 159 207 B1**
(45) Date of publication and mention of the grant of the patent: **01.08.2018**
(21) Application number: 16175567.3
(22) Date of filing: 21.06.2016
(51) Int. Cl.: B60N 2/28

(54) **RESTRAINING DEVICE FOR CHILD SAFETY SEAT**
RÜCKHALTEVORRICHTUNG FÜR KINDERSITZ
DISPOSITIF DE RETENUE POUR SIÈGE DE SÉCURITÉ ENFANT

(30) Priority: 23.10.2015 CN 201520821378 U
(43) Date of publication of application: 26.04.2017
(73) Proprietor: MAX-INF Ningbo Baby Product Co. Ltd., 315104 Ningbo City Zhejiang (CN)
(72) Inventor: Xu, Lihong, Ningbo City (CN)
(74) Representative: Schwerbrock, Florian

(56) References cited:
- US-A1- 2010 072 798
- US-A1- 2011 233 374

## Description

### BACKGROUND OF THE INVENTION

### 1. Field of the Invention

The invention relates to child safety seats and more particularly to a restraining device for a child safety seat complying with ISOFIX.

### 2. Description of Related Art

As more and more families own cars, car traveling has become the top choice for travel for many families owning a car. For families with children, a car is required to install with child safety seats in order to protect safety of the children seated in the car when traveling by car.

ISOFIX is the international standard for attachment points for child safety seats in passenger cars. ISOFIX specifies the anchoring system for child safety seats. It defines standard attachment points to be manufactured into cars, enabling compliant child safety seats to be quickly and safely secured. Currently, many patent literatures regarding ISOFIX devices exist. For example, Chinese Utility Model Publication Number CN203623426U entitled "Improved ISOFIX attachment" is characterized by having less components, a simple construction and high production in order to eliminate drawbacks including an excessive number of components, complex assembly and low production associated with the conventional ISOFIX devices.

In addition, locks of conventional ISOFIX devices have simple construction, inferior mechanism and low safety factor, and are prone to malfunction. Further restraining devices of the art are disclosed from US 2011/233374 A1, with two attachment assemblies and a crossbar interconnecting the assemblies and from US 2010/072798 A1 with an alternative attachment assembly. Thus, the need for improvement still exists.

### SUMMARY OF THE INVENTION

It is therefore one object of the invention to provide a restraining device for a child safety seat comprising two attachment assemblies; and a crossbar interconnecting the attachment assemblies with an improved locking/unlocking function according to claim 1 and with optional features according to claim 2. The above and other objects, features and advantages of the invention will become apparent from the following detailed description taken with the accompanying drawings.

### BRIEF DESCRIPTION OF THE DRAWINGS

FIG. 1 is an exploded view of a restraining device for a child safety seat according to the invention;
FIG. 2 is a longitudinal sectional view of the assembled restraining device showing its unlocked state; and
FIG. 3 is a view similar to FIG. 2 showing a locked state of the restraining device.

### DETAILED DESCRIPTION OF THE INVENTION

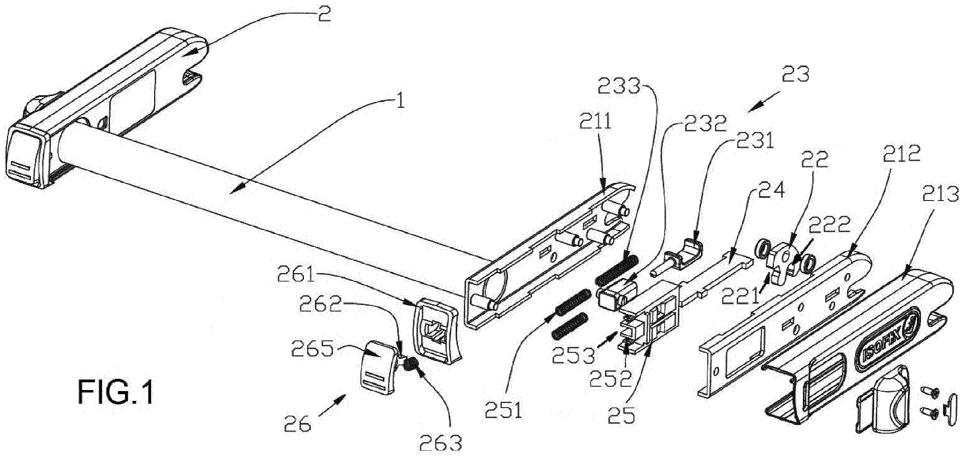

Referring to FIGS. 1 to 3, a restraining device for a child safety seat in accordance with the invention comprises the following components as discussed in detail below.

Two attachment assemblies 2 are interconnected by a crossbar 1. The attachment assembly 2 comprises an attachment unit 21 including a first member 211, a second member 212 secured to the first member 211, and a cover 213; an attachment member 22 pivotably fastened between the first and second members 211, 212 and including a first cavity 221 and a second cavity 222; a first locking member 23 including a main body 232, a locking element 231 having the other end slidably fastened in the main body 232, and a torsion spring 233 put on a rod portion of the first locking element 231 and biased between the main body 232 and the locking element 231; a second locking member 24 having one end engaging the attachment member 22; a moveable member 25 having one end secured to the second locking member 24, the moveable member 25 including two rods 252, a recess 253 between the rods 252, and two torsion springs 251; and a lock 26 including a lever 265, a following member 261, two rod elements 264 on an inner surface of the following member 261 facing the rods 252, a positioning member 262 extending from an inner surface of the lever 265 through the following member 261 into the recess 253 to be retained, and a torsion spring 263 biased between the following member 261 and the lever 265. The torsion springs 251 are put on the rods 252 and on the corresponding rod elements 264. The lever 265 is pivotably fastened between the first and second members 211, 212. The cover 213 is put on the second member 212 to cover all above components except the lever 265 and the following member 261.

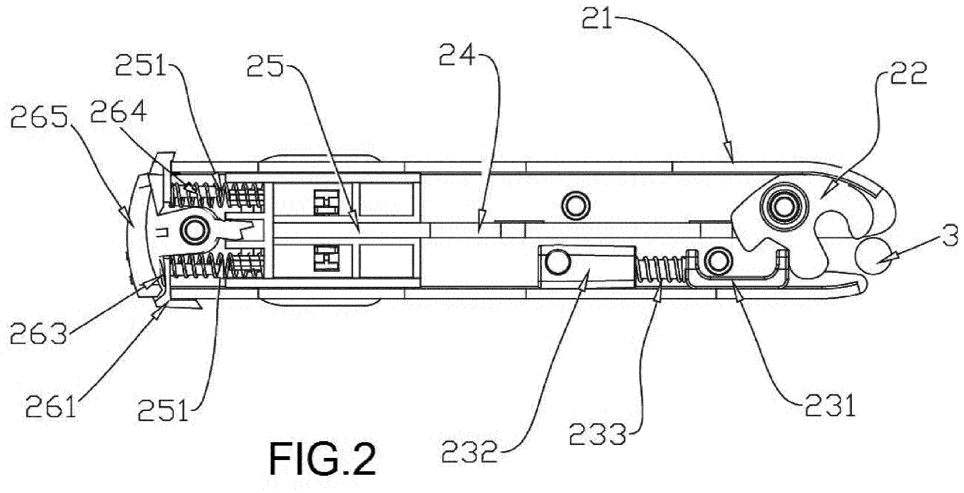

As shown in FIG. 2, in an unlocked state of the restraining device, the torsion spring 263 is compressed, the torsion springs 251 are compressed, the torsion spring 233 is expanded, one end of the second locking member 24 is engaging the attachment member 22, the locking element 231 has one end engaging the first cavity 221, and an attachment point 3 of an automobile clears the second cavity 222.

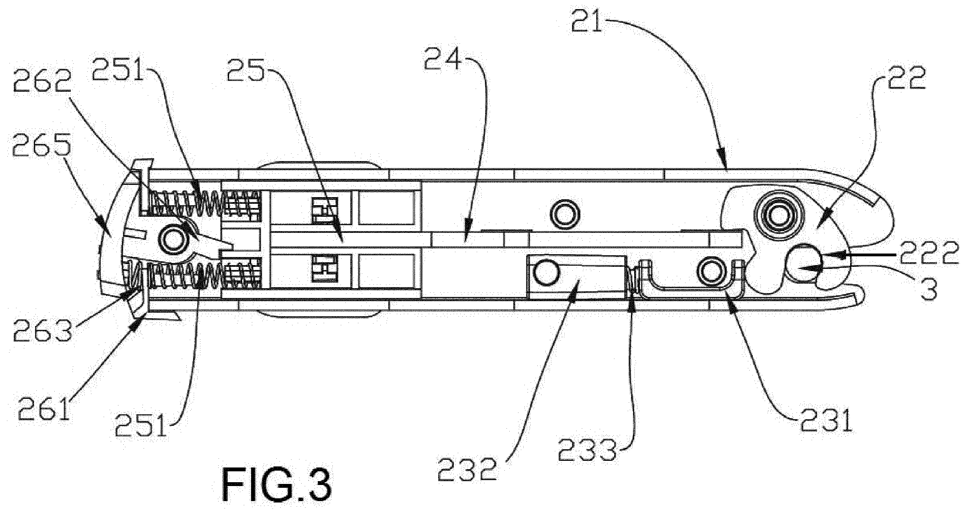

As shown in FIG. 3, when starting from a position of the device as shown in Fig. 2, in response to contacting the attachment point 3, the attachment member 22 rotates until the second locking member 24 inserts into the first cavity 221 of the attachment member 22 while the moveable member 25 moves rightwards and the torsion spring 263 expands to move the lock 26 to pass the positioning member 262 against an end of the recess 253 the moveable member 25, thereby locking the retraining device.

To the contrary, when starting from a position of the device as shown in Fig. 3, the occupant may press the lock 26 to cause the positioning member 262 to clear the moveable member 25 and insert into the recess 253, move the moveable member 25 and the second locking member 24 leftward, and allow rotation of the attachment member 22 thereby unlocking the retaining device. While the invention has been described in terms of a preferred embodiment, those skilled in the art will recognize that the invention can be practiced with modifications and these modifications are contemplated by the invention, as long as they remain within the scope of claims 1 and 2.

## Claims

1. A restraining device for a child safety seat comprising:
two attachment assemblies (2); and
a crossbar (1) interconnecting the attachment assemblies (2); **characterized in that** each attachment assembly (2) comprises:
an attachment unit (21) secured to the crossbar (1) and including a first member (211) and a second member (212) secured to the first member (211);
an attachment member (22) pivotably fastened in the attachment unit (21) and including a first cavity (221) and a second cavity (222);
a spring biased first locking member (23) having one end moveably disposed in the first cavity (221) and including a main body (232), a locking element (231) slidably secured to the main body (232), and a first elastic member (233) biased between the main body (232) and the locking element (231);
a second locking member (24) engaging the attachment member (22);
a spring biased moveable member (25) having one end secured to the second locking member (24); and
a spring biased lock (26) pivotably fastened between the first element (211) and the second element (212) and including a lever (265), a following member (261), a positioning member (262) extending from the lever (265) through the following member (261) into the moveable member (25) to hold in position, and a second elastic member (263) biased between the following member (261) and the lever (265).

2. The restraining device of claim 1, wherein third elastic members (251) are biased between the other end of the moveable member (25) and the following member (261).

## Patentansprüche

1. Eine Rückhalteeinrichtung für einen Kindersitz, umfassend:
zwei Befestigungsmontagen (2); und
einen Querbalken (1), der mit den Befestigungsmontagen (2) verbunden ist;
**dadurch gekennzeichnet, dass**
jede Befestigungsmontage (2) die folgenden Komponenten umfasst:
eine Anbaueinheit (21), die am Querbalken (1) gesichert ist und ein erstes Glied (211) und ein zweites Glied (212) aufweist, wobei das zweite Glied (212) am ersten Glied (211) gesichert ist;
ein Anbauglied (22), das drehbar in der Anbaueinheit (21) befestigt und mit einem ersten Hohlraum (221) und mit einem zweiten Hohlraum (222) gebildet ist;
ein federvorgespanntes erstes verriegelndes Glied (23), dessen ein Ende beweglich im ersten Hohlraum (221) ist und einen Grundkörper (232) aufweist; ein Verriegelungselement (231) gleitbar am Grundkörper (232) gesichert ist; ein erstes elastisches Glied (233) zwischen dem Grundkörper (232) und dem Verriegelungselement (231) vorgespannt ist;
ein zweites verriegelndes Glied (24), mit dem das Anbauglied (22) im Eingriff ist;
ein federvorgespanntes bewegliches Glied (25), dessen ein Ende am zweiten verriegelnden Glied (24) gesichert ist; und
eine federvorgespannte Verriegelung (26), die drehbar zwischen dem ersten Element (211) und dem zweiten Element (212) befestigt ist und einen Hebel (265) aufweist; sich ein folgendes Glied (261) und ein Positionierglied (262) vom Hebel (265) durch das folgende Glied (261) in das bewegliche Glied (25) erstrecken, um in der Position festgehalten zu werden; ein zweites elastisches Glied (263) zwischen dem folgenden Glied (261) und dem Hebel (265) vorgespannt ist.

2. Die Rückhalteeinrichtung nach Anspruch 1, wobei die dritten elastischen Glieder (251) zwischen dem anderen Ende des beweglichen Glieds (25) und dem folgenden Glied (261) vorgespannt sind.

## Revendications

1. Dispositif de retenue pour siège de sécurité enfant **caractérisé par le fait qu'**il comprend :
deux ensembles de fixation (2) ; et
une barre transversale (1) reliant les ensembles de fixation (2) ;
**caractérisé en ce que**
chaque ensemble de fixation (2) comprend :
une unité de fixation (21) fixée à la barre transversale (1) et comprenant un premier élément (211) et un second élément (212) fixé au premier élément (211) ;
un élément de fixation (22) fixé de manière pivotante dans l'unité de fixation (21) et comprenant une première cavité (221) et une seconde cavité (222) ;
un premier élément de verrouillage sollicité par ressort (23) présentant une extrémité disposée de manière mobile dans la première cavité (221) et comprenant un corps principal (232), un élément de verrouillage (231) fixé de manière coulissante au corps principal (232) et un premier élément élastique (233) sollicité entre le corps principal (232) et l'élément de verrouillage (231) ;
un second élément de verrouillage (24) venant en prise avec l'élément de fixation (22) ;
un élément mobile sollicité par ressort (25) présentant une extrémité fixée au second élément de verrouillage (24) ; et
un verrou sollicité par ressort (26) fixé de manière pivotante entre le premier élément (211) et le second élément (212) et comprenant un levier (265), un élément suivant (261), un élément de positionnement (262) s'étendant à partir du levier (265) à travers l'élément suivant (261) dans l'élément mobile (25) pour maintenir en position, et un deuxième élément élastique (263) sollicité entre l'élément suivant (261) et le levier (265).

2. Dispositif de retenue selon la revendication 1, **caractérisé par le fait que** des troisièmes éléments élastiques (251) sont sollicités entre l'autre extrémité de l'élément mobile (25) et l'élément suivant (261).
